Europäisches Patentamt

European Patent Office

Office européen des brevets

(19)

(11) **EP 0 822 528 B1**

(12) **EUROPÄISCHE PATENTSCHRIFT**

(45) Veröffentlichungstag und Bekanntmachung des Hinweises auf die Patenterteilung:
**02.05.2002 Patentblatt 2002/18**

(51) Int Cl.⁷: $G08B\ 21/00$, $B60Q\ 9/00$

(21) Anmeldenummer: **97112893.9**

(22) Anmeldetag: **26.07.1997**

(54) **Steuerschaltung für einen piezoelektrischen Warnsummer**

Driving circuit for a piezoelectric buzzer

Circuit de commande pour un avertisseur piézoélectrique

(84) Benannte Vertragsstaaten:
**DE ES FR GB IT**

(30) Priorität: **03.08.1996 DE 19631429**

(43) Veröffentlichungstag der Anmeldung:
**04.02.1998 Patentblatt 1998/06**

(73) Patentinhaber: Delphi Technologies, Inc.
Troy, MI 48084 (US)

(72) Erfinder: **Schnell, Klaus**
**55435 Gau-Algesheim (DE)**

(74) Vertreter: **Becker, Bernd, Dipl.-Ing.**
**Patentanwälte**
**BECKER & AUE**
**Saarlandstrasse 66**
**55411 Bingen (DE)**

(56) Entgegenhaltungen:
**EP-A- 0 690 435**       **FR-A- 2 468 483**
**US-A- 3 860 919**

- **M. BEITNER ET AL: "Dreiklang-Gong mit der integrierten Schaltung SAB0600" SIEMENS COMPONENTS, Bd. 19, Nr. 4, Juli 1981, Seiten 136-138, XP002046580**
- **W. GSCHEIDLE: "auto reminder" ELEKTOR, Bd. 7, Nr. 7/8, August 1981, CANTERBURY, GB, Seite 30 XP002046581**
- **HELMUT RABL: "Light switch-off reminder for automobiles using the SAE0700 audible tone generator " SIEMENS COMPONENTS, Bd. 21, Nr. 1, Februar 1986, BERLIN, DE, Seiten 14-15, XP002046582**
- **PATENT ABSTRACTS OF JAPAN vol. 007, no. 153 (M-226), 5.Juli 1983 & JP 58 061036 A (MIZUNO KOUGEISHIYA:KK), 11.April 1983,**

**Beschreibung**

Die Erfindung betrifft eine Steuerschaltung für einen piezoelektrischen Warnsummer, insbesondere für Kraftfahrzeuge, mit einer Schaltung zum Erzeugen von zwei unterschiedlichen Frequenzen im Wechsel, umfassend zwei Eingangsversorgungsanschlüsse und zwei Ausgangsansteuerungsanschlüsse für den Summer.

Es kommt immer wieder vor, daß Licht nicht ausgeschaltet wird und Sicherheitseinrichtungen nicht eingeschaltet und/oder nicht verriegelt werden. Um den Benutzer auf die Unterlassung aufmerksam zu machen, werden insbesondere im Kraftfahrzeugbereich Warnsummer eingesetzt. Vorzugsweise sind solche Summer mit zwei unterschiedlich hohen Summtönen ausgestattet, um die Aufmerksamkeit des Benutzers besonders sicher zu erlangen.

Die US Patent schrift 3.860.919 beschreibt eine Steuerschaltung für einen Warnsummer.

Der Erfindung liegt die Aufgabe zugrunde, eine Steuerschaltung

für einen piezoelektrischen Warnsummer zu schaffen, die sehr betriebssicher arbeitet.

Diese Aufgabe ist erfindungsgemäß bei einer Steuerschaltung für einen piezoelektrischen Warnsummer mit den Merkmalen des Anspruchs 1 gelöst. Vorteilhafte Weiterbildungen der erfindungsgemäßen Steuerschaltung sind Gegenstand der Unteransprüche.

Eine erfindungsgemäße Steuerschaltung für einen piezoelektrischen Warnsummer, insbesondere für Kraftfahrzeuge, weist somit eine Schaltung zum Erzeugen von zwei unterschiedlichen

Frequenzen im Wechsel auf, umfassend zwei Eingangsversorgungsanschlüsse und zwei Ausgangsansteuerungsanschlüsse für den Summer. Es ist eine erste Kippstufe mit einem ersten und einem zweiten Ausgang vorgesehen, von denen jeweils einer auf positiver Spannung und der andere auf Masse liegt. Ferner ist eine zweite Kippstufe mit einem ersten Eingang und einem Ausgang vorgesehen, wobei der erste Eingang mit dem ersten und zweiten Ausgang der ersten Kippstufe jeweils über einen Widerstand verbunden ist. Die zweite Kippstufe besteht aus einer Reihenschaltung einer ersten Serienschaltung eines Kondensators und eines Inverters mit Schmitt-Trigger-Eingang und einer zweiten Serienschaltung eines Widerstandes und eines Inverters mit Schmitt-Trigger-Eingang, und zur zweiten Serienschaltung ist ein Widerstand parallel geschaltet.

Sowie eine positive Versorgungsspannung und Masse angelegt sind, summt der Warnsummer. Er erzeugt im Wechsel unterschiedliche Frequenzen f1 und f2.

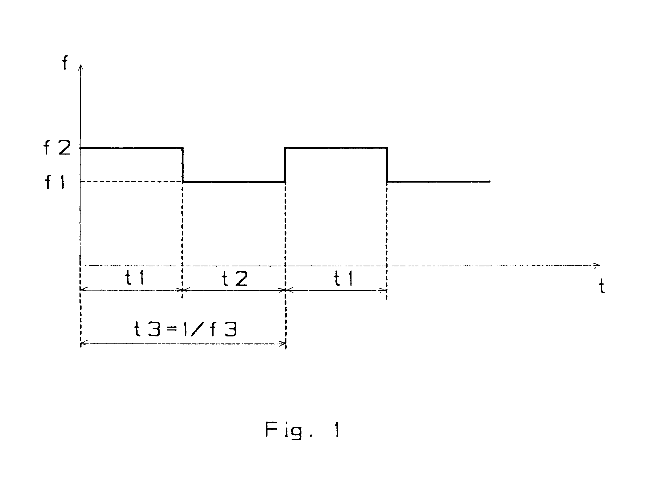

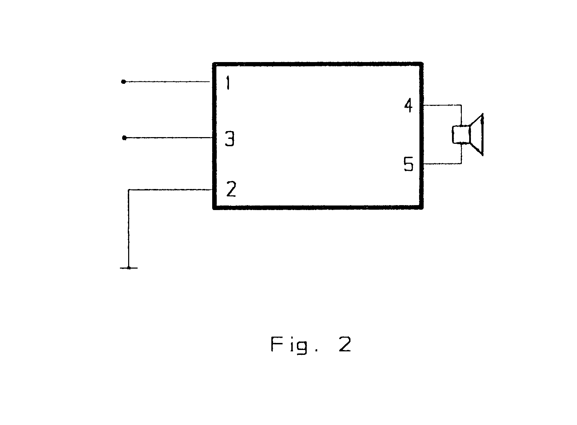

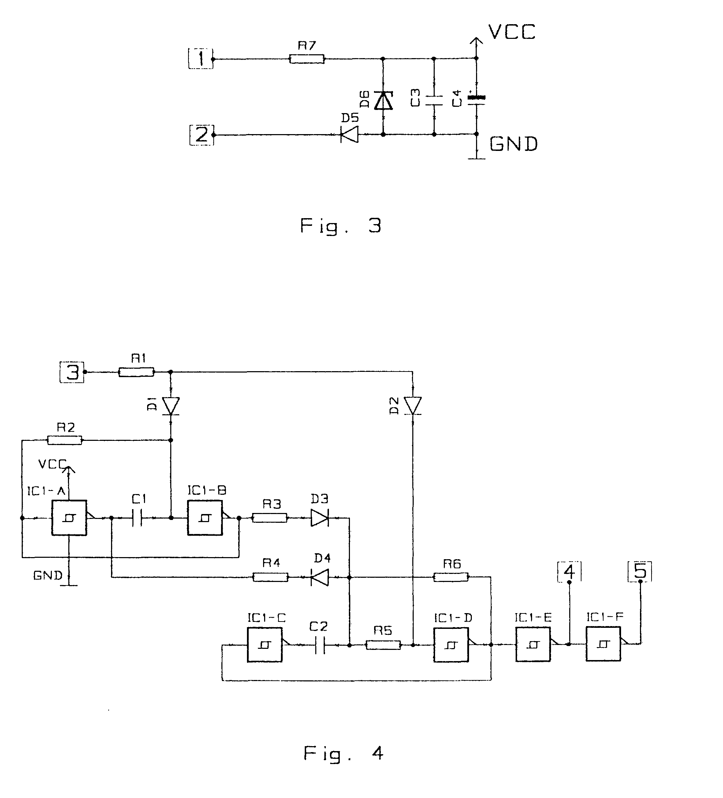

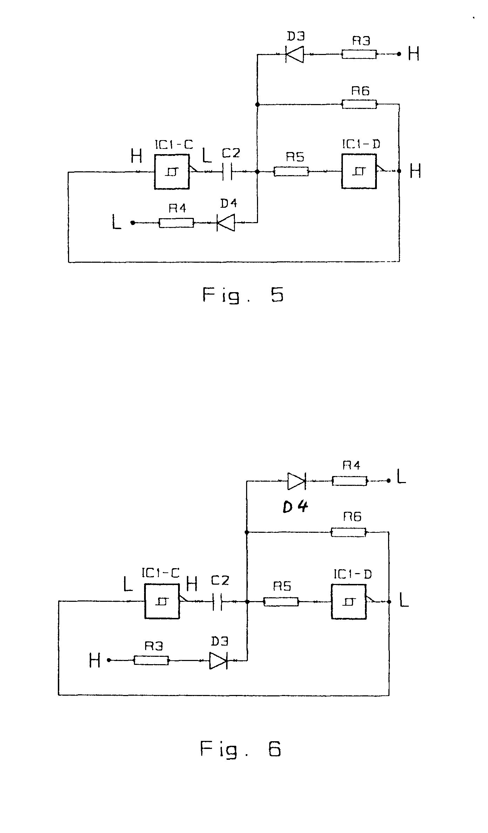

Die zweite Kippstufe gibt ein Rechtecksignal mit einer Frequenz f1 aus, wenn der erste Ausgang der ersten Kippstufe auf positiver Spannung liegt und der zweite Ausgang der ersten Kippstufe auf negativer Spannung liegt. Liegt der erste Ausgang der ersten Kippstufe auf negativer Spannung und ihr zweiter Ausgang auf positiver Spannung, ergibt sich ein Rechtecksignal mit einer Frequenz f2. Die Zeitdauer t1 der Frequenz f1 ist ungefähr gleich der Zeitdauer der Frequenz f2. Die Summe der Zeitdauern t1 und t2 ergibt t3. Der Kehrwert von t3 ergibt f3. Der zeitliche Verlauf der Frequenzen ist in Fig. 1 dargestellt. Im dargestellten Beispiel sind die Zeiten t1 und t2 etwa gleich, d.h. jeweils etwa t3/2. Die Frequenz f1 ist kleiner als die Frequenz f2 (f1 < f2) und die Frequenz f3 ist in bezug auf die beiden Frequenzen f1 und f2 sehr klein (f3 << f1, f2).

Vorzugsweise besteht die erste Kippstufe aus einer Parallelschaltung einer Serienschaltung eines ersten Inverters mit Schmitt-Trigger-Eingang und eines Kondensators sowie eines Widerstandes, deren Ausgang mit einem zweiten Inverter mit Schmitt-Trigger-Eingang verbunden ist. Dabei sind der Ausgang des ersten Inverters mit Schmitt-Trigger-Eingang und der Ausgang des zweiten Inverters mit Schmitt-Trigger-Eingang der ersten und der zweite Ausgang der ersten Kippstufe. An den beiden Ausgängen der ersten Kippstufe ergeben sich so zwei gegenphasige Rechtecksignale mit jeweils der Frequenz f3.

Bei einer bevorzugten Ausführungsform der Steuerschaltung für den piezoelektrischen Warnsummer ist eine Ausgangsstufe vorgesehen, die den Summer von dessen Steuerschaltung trennt. Die Ausgangsstufe umfaßt dabei zweckmäßig eine Serienschaltung von zwei Invertern mit Schmitt-Trigger-Eingang, deren Ausgänge die beiden Ausgangsansteuerungsanschlüsse für den Summer sind. An den beiden Ausgangsanschlüssen steht dann ein gegenphasiges Rechtecksignal zur Verfügung.

Vorteilhaft ist bei der erfindungsgemäßen Steuerschaltung ein Steuereingang zum Abschalten des Warnsummers vorgesehen, mit dem ein Widerstand verbunden ist, mit dessen Ausgang die Eingänge von zwei Dioden verbunden sind. Die Ausgänge der Dioden sind mit dem Eingang des ersten Inverters mit Schmitt-Trigger-Eingang und dem Eingang des Inverters mit Schmitt-Trigger-Eingang der zweiten Serienschaltung der zweiten Kippstufe verbunden. Durch dauerhaftes Anlegen einer positiven Spannung werden die beiden astabilen Kippstufen angehalten und der Warnsummer wird nicht mehr mit einem Rechtecksignal angesteuert. Auf diese Weise wird der Warnsummer abgeschaltet, obwohl die Versorgungsspannung angelegt ist, und es wird kein Warnton mehr erzeugt.

Die Spannungsversorgung der erfindungsgemäßen Steuerschaltung bzw. des Warnsummers kann eine Spannungsversorgung mit einem ersten Anschluß für positive Versorgungsspannung und einem zweiten Anschluß für Masse umfassen, bestehend aus einem Widerstand, einer Zenerdiode, zwei Kondensatoren und einer Diode. Eine solche Spannungsversorgung wird typischerweise im Automobilbereich eingesetzt. Sie bietet aus-reichenden Schutz vor Überspannung, Störsignalen und Verpolung. Die so erzeugte Versorgungsspannung dient zur Versorgung der restlichen Schaltung.

Die Erfindung wird im folgenden weiter anhand eines bevorzugten Ausführungsbeispiels und der Zeichnung beschrieben. Dabei ist die Erfindung nicht auf diese zur Veranschaulichung dargestellten Ausführung beschränkt, ebenfalls auch nicht auf die in den Unteransprüchen angegebenen Kombinationen.

In der Zeichnung zeigen:

Fig. 1          ein Diagramm, das den zeitlichen Verlauf der Frequenzen f1 und f2 des Warnsummers veranschaulicht,

Fig. 2          ein Blockschaltbild der Steuerschaltung für den Warnsummer,

Fig. 3          ein elektrisches Schaltbild einer typischen, für den Warnsummer gemäß der Erfindung verwendeten Spannungsversorgung,

Fig. 4          ein elektrisches Schaltbild eines Ausführungsbeispiels der Steuerschaltung, und

Fig. 5 und 6     zwei Ersatzschaltbilder für die zweite Kippstufe.

Im folgenden wird ein Ausführungsbeispiel der erfindungsgemäßen Steuerschaltung für einen piezoelektrischen Warnsummer beschrieben.

Wie das Blockschaltbild von Fig. 2 zeigt, umfaßt die Steuerschaltung einen Anschluß 1 für die positive Versorgungsspannung Ub, einen Anschluß 2 für Masse, einen Steuereingang 3 zum Abschalten des Warnsummer und zwei Ausgänge 4, 5 zum Ansteuern des piezoelektrischen Summers.

Es ist eine typische Spannungsversorgung vorgesehen, wie sie im Automobilbereich eingesetzt ist. Diese umfaßt zwei Anschlüsse 1 und 2. Der Anschluß 1 ist für die positive Spannungsversorgung von ca. 9 bis 16 V vorgesehen, während der Anschluß 2 für die Masse vorgesehen ist. Der Anschluß 2 ist über eine Diode D5 mit Masse (GND) verbunden. Mit dem Anschluß 1 ist ein Widerstand R7 verbunden. Zwischen den Ausgang und Masse sind eine Zenerdiode D6 sowie zwei Kondensatoren C3 und C4 parallel geschaltet. Die so erzeugte Versorgungsspannung VCC (bezogen auf GND) dient zur Versorgung der restlichen Schaltung.

Die erfindungsgemäße Steuerschaltung besteht im wesentlichen aus einer ersten und einer zweiten Kippstufe. Die erste Kippstufe erzeugt die Frequenz f3, die zur Umschaltung zwischen den Frequenzen f1 und f2 dient. Ein erster und ein zweiter Inverter mit Schmitt-Trigger-Eingang IC1-A, IC1-B, ein Widerstand R2 und ein Kondensator C1 bilden eine astabile Kippstufe. Die Frequenz f3 dieser astabilen Kippstufe ist durch den Kondensator C1 und den Widerstand R2 bestimmt und beträgt

$$f3 = 1 / (2{,}2 \cdot C1 \cdot R2)$$

An den Ausgängen der beiden Inverter IC1-A und IC1-B ergeben sich zwei gegenphasige Rechtecksignale mit jeweils der Frequenz f3.

Die zweite Kippstufe erzeugt entweder die Frequenz f1 oder die Frequenz f2, abhängig von dem Schaltzustand der ersten Kippstufe. Die zeitlichen Beziehungen und Dauern mit f1 und f2 sind bereits erläutert worden. Im einzelnen besteht die zweite Kippstufe aus einem dritten und vierten Inverter mit Schmitt-Trigger-Ausgang IC1-C, IC1-D, zwei Widerständen R5, R6 und einem Kondensator C2. Der Ausgang des vierten Inverters IC1-D ist mit dem Eingang des ersten Inverters verbunden. Ferner umfaßt die zweite Kippstufe zwei mit den Ausgängen des ersten und zweiten Inverters IC1-A, IC1-B verbundene Serienschaltungen R3, D3 und R4, D4, die zwischen dem dritten und vierten Inverter IC1-C, IC1-D angeschlossen sind.

Wenn der Ausgang des ersten Inverters IC1-A auf positiver Spannung und somit der Ausgang des zweiten Inverters IC1-B auf negativer Spannung liegt, erzeugt die sich im astabilen Zustand befindliche zweite Kippstufe die niedrigere Frequenz f1. Die Frequenz ist im wesentlichen durch den Kondensator C2 und den Widerstand R6 bestimmt und beträgt

$$f1 = 1 / (2{,}2 \cdot C2 \cdot R6)$$

Am Ausgang des vierten Inverters IC1-D ergibt sich ein Rechtecksignal mit der Frequenz f1.

Liegt hingegen der Ausgang des ersten Inverters IC1-A auf negativer Spannung sowie der Ausgang des zweiten Inverters IC1-B auf positiver Spannung, ergeben sich für die zweite Kippstufe die Ersatzschaltbilder gemäß Fig. 5 und 6. Wenn der Spannungsabfall an den Dioden D3, D4 vernachlässigt wird, ist der frequenzbestimmende Widerstand durch die Parallelschaltung von R3 und R6 bzw. R4 und R6 bestimmt. Ist R3 gleich R4, ergibt sich am Ausgang des vierten Inverters IC1-D als Frequenz des Rechtecksignals

$$f2 \approx 1 / \left(2{,}2 \cdot C2 \cdot \frac{R3 \cdot R6}{R3 + R6}\right)$$

$$\approx 1 / \left(2{,}2 \cdot C2 \cdot \frac{R4 \cdot R6}{R4 + R6}\right)$$

F2 ist somit größer als f1.

Die Ausgangsstufe der hier veranschaulichten Steuerschaltung schließlich besteht aus einem fünften und sechsten Inverter mit Schmitt-Trigger-Ausgang IC1-E, IC1-F, mittels denen die Steuerschaltung und der Warnsummer entkoppelt werden (vgl. Fig. 4). Ihre Ausgänge bilden zugleich die in Fig. 2 dargestellten Ausgangsanschlüsse 4 und 5 und liefern dort ein gegenphasiges Rechtecksignal.

Damit der Warnsummer ausgeschaltet werden kann, umfaßt die Steuerschaltung noch einen Steuereingang, der in Fig. 2 als Anschluß 3 dargestellt ist. An den Steuereingang sind ein Widerstand R1 sowie zwei Dioden D1, D2 angeschlossen. Liegt eine Dauerspannung von 9 bis 12 V am Eingang 3 an, werden die erste und die zweite Kippstufe angehalten und es wird kein Rechtecksignal mehr an den Warnsummer ausgegeben. Dieser erzeugt daraufhin kein Warnsignal mehr.

**Patentansprüche**

1. Steuerschaltung für einen piezoelektrischen Warnsummer, insbesondere für Kraftfahrzeuge, mit einer Schaltung zum Erzeugen von zwei unterschiedlichen Frequenzen im Wechsel, umfassend zwei Eingangsversorgungsanschlüsse (1, 2) und zwei Ausgangssteuerungsanschlüsse (4, 5) für den Summer, **dadurch gekennzeichnet, daß**

    - eine erste Kippstufe mit einem ersten und einem zweiten Ausgang vorgesehen ist, von denen jeweils einer auf positiver Spannung und der andere auf Masse liegt,
    - eine zweite Kippstufe mit einem ersten Eingang und einem Ausgang vorgesehen ist, wobei der erste Eingang mit dem ersten und zweiten Ausgang der ersten Kippstufe jeweils über einen Widerstand (R4, R3) verbunden ist, und
    - die zweite Kippstufe aus einer Reihenschaltung einer ersten Serienschaltung eines Kondensators (C2) und eines Inverters mit Schmitt-Trigger-Eingang (IC1-C) und einer zweiten Serienschaltung eines Widerstandes (R5) und eines Inverters mit Schmitt-Trigger-Eingang (IC1-D) besteht und zur zweiten Serienschaltung ein Widerstand (R6) parallel geschaltet ist.

2. Steuerschaltung für einen piezoelektrischen Warnsummer nach Anspruch 1, **dadurch gekennzeichnet, daß**

    - die erste Kippstufe aus einer Parallelschaltung einer Serienschaltung eines ersten Inverters mit Schmitt-Trigger-Eingang (IC1-A) und eines Kondensators (C1) sowie eines Widerstandes (R2) besteht, deren Ausgang mit einem zweiten Inverter mit Schmitt-Trigger-Eingang (IC1-B) verbunden ist, und
    - der Ausgang des ersten Inverters mit Schmitt-Trigger-Eingang (IC1-A) und der Ausgang des zweiten Inverters mit Schmitt-Trigger-Eingang (IC1-B) der erste und der zweite Ausgang der ersten Kippstufe sind.

3. Steuerschaltung für einen piezoelektrischen Warnsummer nach Anspruch 1 oder 2, **dadurch gekennzeichnet, daß** eine Ausgangsstufe vorgesehen ist, die den Summer von der Steuerschaltung trennt.

4. Steuerschaltung für einen piezoelektrischen Warnsummer nach Anspruch 3, **dadurch gekennzeichnet, daß** die Ausgangsstufe eine Serienschaltung von zwei Invertern mit Schmitt-Trigger-Eingang (IC1-E, IC1-F) umfaßt, deren Ausgänge die beiden Ausgangsansteuerungsanschlüsse für den Summer sind.

5. Steuerschaltung für einen piezoelektrischen Warnsummer nach einem der Ansprüche 1 bis 4, **dadurch gekennzeichnet, daß** ein Steuereingang (3) vorgesehen ist, mit dem ein Widerstand (R1) verbunden ist, mit dessen Ausgang die Eingänge von zwei Dioden (D1, D2) verbunden sind, deren Ausgänge mit dem Ausgang des ersten Inverters mit Schmitt-Trigger-Eingang (IC1-A) und dem Eingang des Inverters mit Schmitt-Trigger-Eingang (IC1-D) der zweiten Serienschaltung der zweiten Kippstufe verbunden sind.

6. Steuerschaltung für einen piezoelektrischen Warnsummer nach einem der Ansprüche 1 bis 5, **dadurch gekennzeichnet, daß** eine Spannungsversorgung mit einem ersten Anschluß für positive Versorgungsspannung und einem zweiten Anschluß für Masse vorgesehen ist, bestehend aus einem Widerstand (R7), einer Zenerdiode (D6), zwei Kondensatoren (C3, C4) und einer Diode (D5).

**Claims**

1. Control circuit for a piezoelectric warning buzzer, more especially for automotive vehicles, having a circuit for generating two different frequencies so as to alternate with each other, including two input supply connections (1, 2) and two output control connections (4, 5) for the buzzer, **characterised in that**

    - a first trigger stage is provided with a first output and a second output, one of which is at a positive voltage, and the other is at earth, respectively,
    - a second trigger stage is provided with a first input and an output, the first input being connected to the first and second outputs of the first trigger stage via a resistor (R4, R3) respectively, and

- the second trigger stage comprises a series connection of a first series connection of a capacitor (C2) and an inverter with Schmitt-trigger input (IC1-C) and a second series connection of a resistor (R5) and an inverter with Schmitt-trigger input (IC1-D), and a resistor (R6) is connected in parallel to the second series connection.

2. Control circuit for a piezoelectric warning buzzer according to claim 1, **characterised in that**

- the first trigger stage comprises a parallel circuit of a series connection of a first inverter with Schmitt-trigger input (IC1-A) and a capacitor (C1) as well as a resistor (R2), the output of which circuit is connected to a second inverter with Schmitt-trigger input (IC1-B), and
- the output of the first inverter with Schmitt-trigger input (IC1-A) and the output of the second inverter with Schmitt-trigger input (IC1-B) are the first output and the second output of the first trigger stage.

3. Control circuit for a piezoelectric warning buzzer according to claim 1 or 2, **characterised in that** an output stage is provided, which separates the buzzer from the control circuit.

4. Control circuit for a piezoelectric warning buzzer according to claim 3, **characterised in that** the output stage includes a series connection of two inverters with Schmitt-trigger input (IC1-E, IC1-F), the outputs of which are the two output actuating connections for the buzzer.

5. Control circuit for a piezoelectric warning buzzer according to one of claims 1 to 4, **characterised in that** a control input (3) is provided, to which is connected a resistor (R1), to the output of which are connected the inputs of two diodes (D1, D2), the outputs of which are connected to the output of the first inverter with Schmitt-trigger input (IC1-A) and to the input of the inverter with Schmitt-trigger input (IC1-D) of the second series connection of the second trigger stage.

6. Control circuit for a piezoelectric warning buzzer according to one of claims 1 to 5, **characterised in that** a power supply is provided with a first connection for positive supply voltage and with a second connection for earth, comprising a resistor (R7), a Zener diode (D6), two capacitors (C3, C4) and a diode (D5).

**Revendications**

1. Circuit de commande pour un avertisseur piézoélectrique, en particulier pour véhicules automobiles, avec un circuit pour produire deux fréquences différentes en alternance, comprenant deux bornes d'alimentation d'entrée (1, 2) et deux bornes de commande de sortie (4, 5) pour l'avertisseur, **caractérisé en ce que**

- il est prévu un premier étage de bascule avec des première et deuxième sorties, dont l'une est portée à une tension positive et l'autre à la masse,
- un deuxième étage de bascule avec une première entrée et une sortie, la première entrée étant reliée aux première et deuxième sorties du premier étage de bascule chacune par l'intermédiaire de résistances respectives (R4, R3), et
- le deuxième étage de bascule comportant une combinaison série d'un premier circuit en série d'un condensateur (C2) et d'un inverseur avec entrée de bascule de Schmitt (IC1-C) et d'un deuxième circuit en série d'une résistance (R5) et d'un inverseur avec entrée de bascule de Schmitt (IC1-D), et une résistance (R6) étant connectée en parallèle au deuxième couplage en série.

2. Circuit de commande pour un avertisseur piézoélectrique selon la revendication 1, **caractérisé en ce que**

- le premier étage de bascule est constitué d'une combinaison parallèle d'un circuit en série d'un premier inverseur avec entrée de bascule de Schmitt (IC1-A) et d'un condensateur (C1) ainsi que d'une résistance (R2), dont la sortie est reliée à un deuxième inverseur avec entrée de bascule de Schmitt (IC1-B), et
- la sortie du premier inverseur avec entrée de bascule de Schmitt (IC1-A) et la sortie du deuxième inverseur avec entrée de bascule de Schmitt (IC1-B) sont les première et deuxième sorties du premier étage de bascule.

3. Circuit de commande pour un avertisseur piézoélectrique selon la revendication 1 ou 2, caractérisé en ce qu'il est prévu un étage de sortie qui sépare l'avertisseur du circuit de commande.

4. Circuit de commande pour un avertisseur piézoélectrique selon la revendication 3, **caractérisé en ce que** l'étage de sortie comprend un circuit en série de deux inverseurs avec entrée de bascule de Schmitt (IC1-E, IC1-F), dont les sorties sont les deux bornes de commande de sortie pour l'avertisseur.

5. Circuit de commande pour un avertisseur piézoélectrique selon l'une des revendications 1 à 4, **caractérisé en ce qu'**il est prévu une entrée de commande (3), à laquelle est reliée une résistance (R1), à la sortie de laquelle sont reliées les entrées de deux diodes (D1, D2), dont les sorties sont reliées à la sortie du premier inverseur avec entrée de bascule de Schmitt (IC1-A) et à l'entrée de l'inverseur avec entrée de bascule de Schmitt (IC1-D) du deuxième circuit en série du deuxième étage de bascule.

6. Circuit de commande pour un avertisseur piézoélectrique selon l'une des revendications 1 à 5, **caractérisé en ce qu'**il est prévu une alimentation en tension avec une première borne pour une tension d'alimentation positive et une deuxième borne pour la masse, constituée d'une résistance (R7), d'une diode de Zener (D6), de deux condensateurs (C3, C4) et d'une diode (D5).

Fig. 1

Fig. 2

Fig. 3

Fig. 4

Fig. 5

Fig. 6